## Europäisches Patentamt

## European Patent Office

## Office européen des brevets

(19)

(11) Veröffentlichungsnummer: **0 237 486**
**B1**

(12) **EUROPÄISCHE PATENTSCHRIFT**

(45) Veröffentlichungstag der Patentschrift:
**24.05.89**

(51) Int. Cl.⁴: **F28C 1/14,** F28C 1/06,
F28F 25/12, F01K 9/02

(21) Anmeldenummer: **87810124.5**

(22) Anmeldetag: **04.03.87**

(54) **Kühlelement.**

(30) Priorität: **08.03.86 CH 957/86**

(43) Veröffentlichungstag der Anmeldung:
**16.09.87 Patentblatt 87/38**

(45) Bekanntmachung des Hinweises auf die Patenterteilung:
**24.05.89 Patentblatt 89/21**

(84) Benannte Vertragsstaaten:
**AT BE DE ES FR GB IT NL SE**

(56) Entgegenhaltungen:
**EP-A- 0 017 517**
**DE-A- 3 135 783**
**FR-A- 2 289 871**
**FR-A- 2 388 235**
**GB-A- 571 292**
**GB-A- 1 559 330**
**US-A- 4 076 771**

(73) Patentinhaber: **Colenco AG, Parkstrasse 27,
CH-5400 Baden(CH)**

(72) Erfinder: **Paulovic, Michal, Naglerwiesenstrasse 54,
CH-8049 Zürich(CH)**
Erfinder: **Yadigaroglu, George, Prof. Dr.,
Hinterbergstrasse 83, CH-8044 Zürich(CH)**

(74) Vertreter: **Fillinger, Peter, Dr., Rütistrasse 1a,
CH-5400 Baden(CH)**

ACTORUM AG

**Beschreibung**

Die vorliegende Erfindung bezieht sich auf ein Kühlelement nach dem Oberbegriff des Anspruchs 1.

Derartige Kühlelemente sind als Trockenkühlelemente bekannt und werden in Trocken- oder in Verbindung mit Nasskühlelementen in Hybridkühlsystemen eingesetzt.

Bei vielen technischen Prozessen ist es erforderlich, die durch die Prozessführung zwangsläufig anfallende Abwärme an die Umgebung abzuführen. Für die Wirtschaftlichkeit des Prozesses ist das Temperaturniveau der Wärmeabfuhr besonders wichtig. Als Umgebungsmedium wird beim Kühlen das Wasser oder so wie bei den hier abgehandelten Systemen die Luft der Atmosphäre genutzt. Je nach angewendeten Wärmeübertragungsprinzipien ist zwischen Nass-, Trocken und Hybridkühlsystem zu unterscheiden.

In einem Nasskühlsystem steht die zu kühlende Flüssigkeit in direktem Kontakt mit der Umgebungsluft. Die an die Luft abgegebene Wärme setzt sich aus dem sensiblen und dem latenten Anteil zusammen. Der sensible Anteil wird durch konvektive Wärmeübertragung transportiert und bewirkt eine Erhöhung der Lufttemperatur. Der latente Anteil entspricht der Verdampfungsenthalpie der verdunsteten Flüssigkeit und bewirkt eine Zunahme der Luftfeuchtigkeit. Bei den Nasskühlsystemen überwiegt der latente Anteil. Theoretisch ist eine Kühlung bis zur Feucht-Thermometertemperatur möglich, deshalb kann bei der Nasskühlung eine tiefere Temperatur als bei der Trockenkühlung erreicht werden. Die Abmessungen eines Nasskühlers sind vor allem wegen des geringeren Luftdurchsatzes kleiner als beim Trockenkühler. Bei den thermischen Kraftwerken mit Rückkühlung ist die Nasskühlung das am häufigsten angewendete Kühlverfahren.

In zunehmendem Masse wird jedoch der sichtbare Schwaden, das heisst die aus dem Kühlturm ausströmende gesättigte oder oft übersättigte Luft als störend empfunden. Ausserdem ist die Nasskühlung an einigen Standorten wegen des relativ grossen Zusatzwasserbedarfes nicht durchführbar.

In einem Trockenkühlsystem ist die zu kühlende Flüssigkeit durch die Wand des Wärmeaustauschers von der Kühlluft getrennt. Die Wärmeübertragung erfolgt durch die Konvektion und bewirkt eine Erhöhung der Lufttemperatur. Im Gegensatz zur Nasskühlung findet nur eine sensible Wärmeübertragung bei konstanter absoluter Luftfeuchte statt. Die aus dem Kühlturm ausströmende Luft ist ungesättigt und deshalb in unmittelbarer Umgebung des Kühlturms unsichtbar. Eine eventuell in grösserer Höhe einsetzende Rückkondensation wird nicht als störend empfunden. Nachteilig gegenüber einem Nasskühlsystem sind neben dem höheren Temperaturniveau bei Sommerbetrieb vor allem die grösseren Abmessungen des Systems und die höheren Investitionskosten.

Die Trockenkühlung findet breitere Anwendung in Prozessen mit höherem Temperaturniveau der Wärmeabfuhr, wie zum Beispiel Kühlung von Verbrennungsmotoren, Transformatoren usw., oder in Prozessen, bei denen eine Trennung des Systemmediums von der Umgebung erforderlich ist, wie zum Beispiel Kältemaschinen, chemische und Lebensmittelindustrie. In der Kraftwerkstechnik wird die Trockenkühlung meistens nur in standortbedingten Sonderfällen oder zur direkten Kondensation angewendet.

In einem Hybridkühlsystem werden Nass- und Trockenkühlung kombiniert. Dadurch wird die Länge des sichtbaren Schwadens im Vergleich zum Nasskühlsystem verkürzt und das Temperaturniveau der Wärmeabfuhr bzw. die Abmessungen im Vergleich zur Trockenkühlung verringert.

Nach gegenwärtigem Stand der Technik besteht der wärmetechnische Teil eines Hybridkühlsystems aus Kühlelementen im Trockenteil und Rieseleinbauten im Nassteil, bzw. werden Trockenkühlsysteme mit flüssigkeitsgefüllten Kühlelementen, deren äussere Wärmeübertragungsflächen zusätzlich benetzt sind, verwendet. Ein solches Hybridkühlsystem ist z.B. in der GB-A 571 292 beschrieben. Das Funktionsprinzip entspricht den bei Trocken- bzw. Nasskühlung beschriebenen Wärmeübertragungsarten. Durch die Vermischung der Luftströme aus Trocken- und Nassteil in speziellen Mischeinbauten ergibt sich der thermodynamische Zustand des Schwadens am Kühlturmaustritt. Der Anteil des Trockenteils bzw. des Nassteils an der Gesamtleistung hat an den Kosten und am Betriebsverhalten des Systems einen wesentlichen Einfluss. Er ist ein Kompromiss zwischen der Forderung nach der Verkleinerung des sichtbaren Schwadens einerseits und der Forderung nach möglichst tiefem Temperaturniveau der Wärmeabfuhr bzw. den niedrigen Gesamtkosten andererseits. Ein System, das bei Sommerbetrieb mit nur einem kleinen Leistungsanteil des Trockenteiles und bei Winterbetrieb dagegen mit einem kleinen Anteil des Nassteiles die gesamte Abwärme abführen könnte, würde die Anforderungen am besten erfüllen. Die technische Realisierung eines derartigen Systems würde bei der Verwendung von gewöhnlichen Kühlelementen zwangsläufig zur Überdimensionierung führen und somit auf die Wirtschaftlichkeitsgrenze stossen. Die Ursache ist vor allem darin zu sehen, dass bei den Kühlelementen, die dem Stand der Technik entsprechen, die Leistung im relativ schmalen Bereich zwar durch Änderung des Massendurchsatzes an der Luft- bzw. Wasserseite geregelt wird, aber die Wärmeübertragungsarten im Trocken- und Nassteil unverändert bleiben.

Die vorliegende Erfindung stellt sich die Aufgabe, ein Kühlelement zu schaffen, das wahlweise als Trocken- oder Nasskühlelement oder gleichzeitig als Trocken- und als Nasskühlelement betrieben werden kann.

Erfindungsgemäss wird diese Aufgabe gelöst, durch die kennzeichnenden Merkmale des Anspruchs 1.

Die Erfindung hat den Vorteil, dass bei ihrer Verwendung in einer Kühlbatterie wahlweise alle oder einzelne der Kühlelemente als Trocken- oder Nasskühlelemente bzw. gleichzeitig trocken und nass betrieben werden können. Werden der Anteil der Nass- und der Trockenkühlung in Abhängigkeit von Temperatur und Luftfeuchtigkeit, das heisst der meteorologischen Umweltbedingungen selbsttätig verstellt, ist eine Schwadenbildung im nahen Bereich einer Kühlbatterie bzw. eines Kühlturmes vermeidbar.

Wegen des stabilen Auftriebs und wegen der Schwadenfreiheit des Kühlsystems ist es erforderlich, noch im Kühlturm die Vermischung der trockenen und der nassen Luft zu erreichen. Die zum Trocken- bzw. zum Nassbetrieb angesteuerten Kühlelemente werden im Kühlturm das Strömungsfeld in eine Vielzahl trockener bzw. nasser Luftteilströme zerteilen und damit den Vermischungsvorgang begünstigen. Die Erfindung hat daher den weiteren Vorteil, dass Mischeinbauten entfallen können.

Anhand der beiliegenden schematischen Zeichnung wird die Erfindung beispielsweise erläutert. Es zeigen:

Fig. 1 einen Längsschnitt durch ein Kühlelement ensprechend dem Schnitt I-I in Fig. II,

Fig. 2 eine Frontansicht des Kühlelementes nach Fig. 1 teilweise geschnitten,

Fig. 3 ein Teil eines Kühlelementes in perspektivischer Ansicht,

Fig. 4 eine Draufsicht auf die Austrittenden der Kühlrohre teilweise geschnitten [Pfeil IV in Fig 3],

Fig. 5 eine Draufsicht auf die Eintrittsenden der Kühlrohre teilweise geschnitten [Pfeil V in Fig. 3],

Fig. 6 einen Ausschnitt aus der Frontansicht eines Kühlelementes,

Fig. 7 eine Seitenansicht mehrerer zu einer Kühlbatterie zusammengefasster Kühlelemente,

Fig. 8 eine Draufsicht auf Fig. 7 [Schnitt VIII-VIII in Fig. 7] und

Fig. 9 eine gleiche Ansicht wie Fig. 7 einer Kaskadenkühlbatterie.

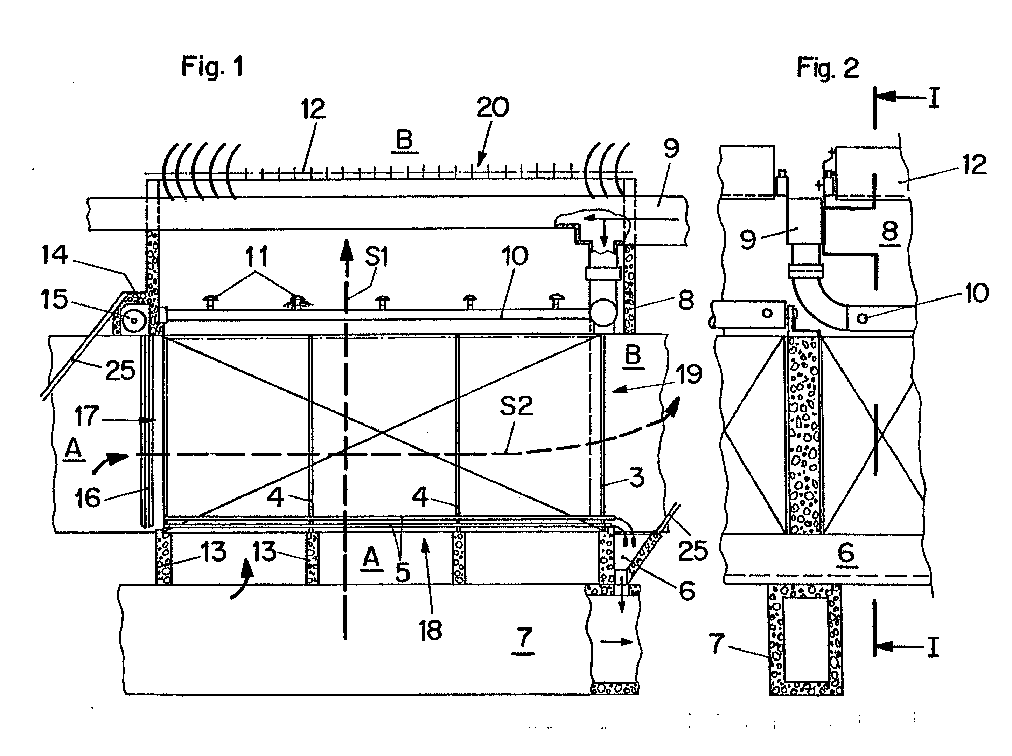

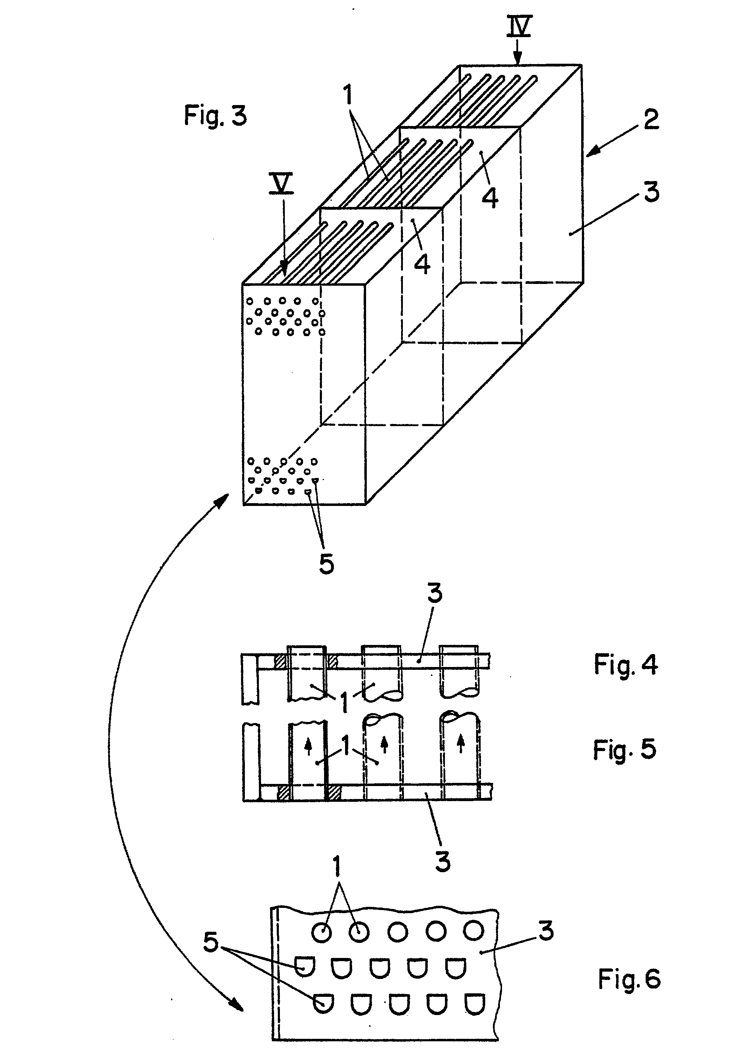

Das in den Fig. 1 bis 6 gezeigte Kühlelement weist einen die Kühlrohre 1 tragenden Körper 2 auf, der durch einen rechteckigen Mantel 3 mit Versteifungswänden 4 gebildet wird. Der Mantel 3 ist von den parallelen Kühlrohren 1 durchsetzt, welche in den schmäleren, einander gegenüberliegenden Wandabschnitten befestigt bzw. gelagert sind. Die Eintrittsenden der nach der Aussenseite des Mantels 3 offenen Rohre 1 sind fest mit dem entsprechenden Wandabschnitt des Mantels 3 verbunden, wogegen die Austrittsenden in entsprechenden Bohrungen des gegenüberliegenden Wandabschnittes achsial verschiebbar gelagert sind. Längenänderungen der Rohre 1 durch Temperaturschwankungen sind dadurch zwangslos möglich. Die Kühlrohre 1 sind in bekannter Weise in horizontalen Reihen angeordnet, wobei benachbarte Reihen gegenseitig um den halben horizontalen Rohrabstand versetzt sind. Eine fluchtende Rohranordnung ist ebenfalls möglich. Lotrecht unter den Rohren 1 verlaufen Auffangrinnen 5 (Fig. 1, 3 und 6), welche das von den Rohren 1 tropfende Wasser auffangen und ausserhalb des Mantels 3 einer Sammelrinne 6 zuführen. Diese ihrerseits übergibt das Wasser an eine Rücklaufleitung 7. Die Rohre 1 können aus Metall, Glas, Keramik oder einem geeigneten Kunststoff sein.

Wie in den Fig. 1 und 2 gezeigt weist das Kühlelement nach oben an den Mantel 3 anschliessend einen im Querschnitt rechteckigen Schacht 8 auf, der zusammen mit dem Mantel 3 einen Kanal bildet, der einen ersten Strömungsweg S1 seitlich begrenzt. Der Schacht 8 ist von einer Wasserzufuhrleitung 9 durchsetzt, die Sprührohre 10 mit Sprühdüsen 11 mit Kühlwasser versorgt. Sein oberes Ende ist von einem Lamellenvorhang 12 überdeckt, dessen Lamellen schwenkbar zwischen der in Fig. 1 gezeigten offenen und einer geschlossenen Stellung schwenkbar sind und die, je nach ihrer Schwenklage einen grösseren oder kleineren Strömungswiderstand im ersten Strömungsweg S1 erzeugen und zudem in offener Stellung die Funktion des bekannten Tropfenabscheiders haben.

Das Kühlelement ist auf Träger 13 aufgesetzt, an denen auch die Sammelrinne 6 befestigt ist. Die Träger 13 ruhen ihrerseits auf der als Träger ausgebildeten Rücklaufrinne 7.

Die Kühlrohre 1 bilden von ihrem Eintrittsende bis zu ihrem Austrittsende (in Fig. 1 von links nach rechts) einen zweiten Strömungsweg S2 innerhalb der Rohre, der quer durch den ersten Strömungsweg S1 führt. Das von dem Luftstrom S2 im Querstrom gekühlte Wasser fliesst durch die Sprühdüsen 11 und benetzt die Aussenflächen der Rohre 1. Die Rohre 1 können innenseitig mit Rippen zur Verbesserung des Wärmetausches versehen sein. Am Fuss des Schachtes 8 ist über den Eintrittsenden der Kühlrohre 1 eine Kammer 14 für einen Rolladen 15 vorgesehen, der in seitlichen Führungen 16 vor die offenen Eintrittsenden der Kühlrohre 1 absenkbar ist und je nach dessen Stellung den Strömungswiderstand im zweiten Strömungsweg vergrössert oder verkleinert. Dieser Rolladen 15 kann auf die Austrittsenden der Rohre 1 verlegt oder durch Jalousien ersetzt werden, oder kann indessen auf entfallen.

Vom beschriebenen Kühlelement sind die Teile 17 und 18 seiner Aussenseite dazu bestimmt, an eine Zone A höheren Luftdruckes und die Teile 19 und 20 an eine Zone B niedereren Luftdruckes anzugrenzen. Bedingt durch die Druckdifferenz entsteht eine Kühlluftströmung entlang dem ersten und/oder zweiten Strömungsweg S1 bzw. S2, wobei mit der Stellung des Lamellenvorhanges 12 bzw. des Rolladens 15 die längs den Strömungswegen S1 bzw. S2 strömenden Kühlluftmengen bestimmt werden.

Wird der Lamellenvorhang 12 bei gehobenem [gegebenenfalls fehlendem] Rolladen 15 geschlossen und damit der erste Strömungsweg S1 gesperrt, arbeitet das Kühlelement als reines Trockenelement in dem die Kühlluft dem zweiten Strömungsweg S2 folgt und dabei nicht mit dem Kühlwasser in direkte Berührung tritt und längs dem nur die sensible Wärme aus dem Kühlwasser durch Konvektion an die Kühluft übertritt.

Umgekehrt arbeitet das beschriebene Kühlelement als reines Nasselement wenn der Lamellenvorhang ganz offen und der Rolladen 15 ganz abgesenkt ist. In diesem Fall folgt die Kühlluft ausschliesslich dem ersten Strömungsweg S1. Kühlwasser und Kühlluft berühren sich in diesem Fall längs dem ersten Strömungsweg S1 direkt im Gegenstrom, so dass dem Wasser nicht nur die fühlbare Wärme durch Konvektion sondern auch latente Wärme durch Verdunstung entzogen wird.

Die Verteilung der Luftströme in die Strömungswege S1 und S2 durch die Stellorgane 12 und gegebenenfalls 15 wird entsprechend den meteorologisch relevanten Umgebungsparametern wie Temperatur und Luftfeuchtigkeit selbsttätig über nicht dargestellte Fühler gesteuert. Dabei kann das Element vollständig nass oder trocken oder in einer stufenlos einstellbaren Zwischenstellung betrieben werden.

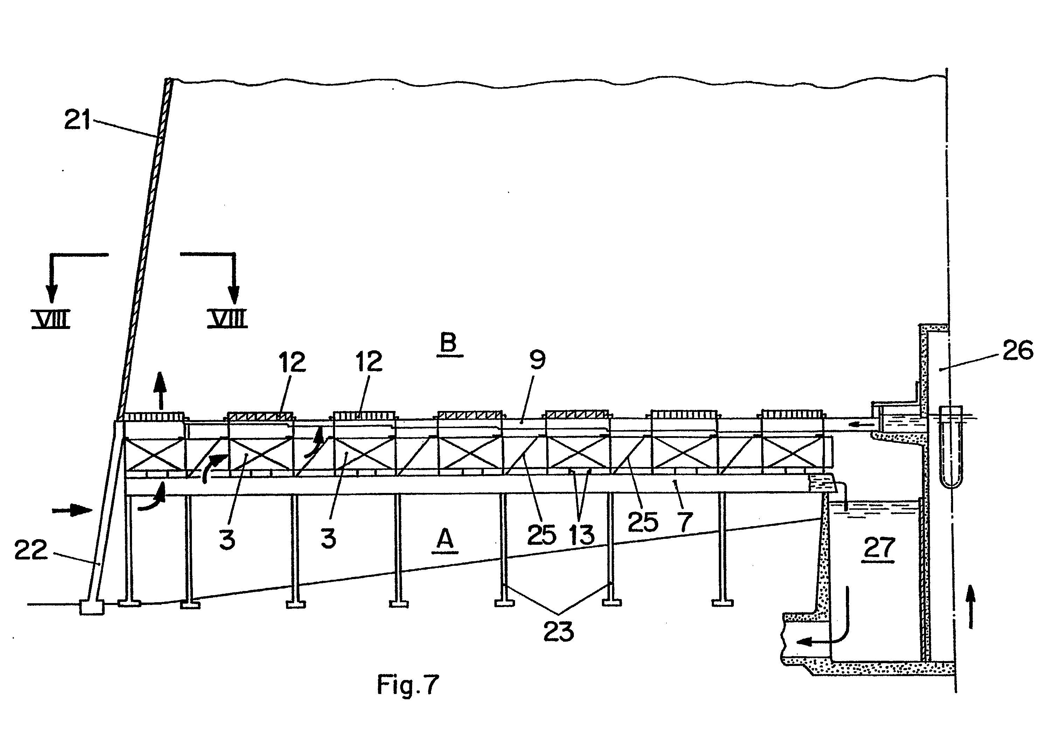

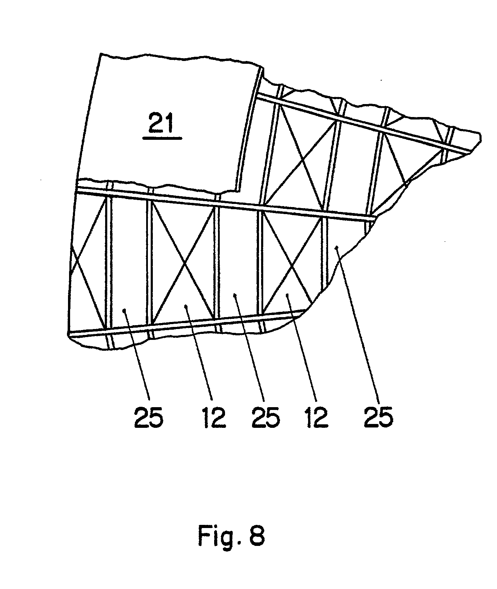

Die Fig. 7 und 8 zeigen die Zusammenfassung mehrerer Kühlelemente in einer horizontalen Ebene in einem Kühlsystem mit Kühlturm. Der Kühlturmmantel 21 steht auf kreisförmig angeordneten und voneinander distanzierten Pfeilern 22, zwischen denen die Umgebungsluft in das Innere des Kühlturmes eintreten kann. Auf Säulen 23 ruht ein Rostboden bestehend aus den als Längsträgern ausgebildeten Rücklaufleitungen und den darauf liegenden Trägern 13. Auf diesem Rostboden sind radialstrahlig eine Vielzahl von Kühlbatterien angeordnet. Innerhalb einer Kühlbatterie ist jeweils das Austrittsende der Kühlrohre eines Kühlelementes dem Eintrittsende der Kühlrohre benachbarten Kühlelementes zugewandt. Zwischen zwei benachbarten Kühlelementen ist eine schräg ansteigende Trennwand 25 vorgesehen, welche zusammen mit den Kühlelementen die Zone A höheren Luftdrucks von der Zone B niederen Luftdrucks trennt und gleichzeitig als Umlenkorgan wirkt. Als solche lenkt sie mit seiner Oberseite die aus den Austrittsenden der Kühlrohre 1 des einen Elementes austretende Luft nach oben um, wogegen seine Unterseite die aufsteigende Luft in die Eintrittsenden der Kühlrohre 1 des anderen Kühlelementes lenkt. Die Kühlelemente mit den Trennwänden 25 bzw. die aneinander grenzenden Kühlbatterien bilden zwischen den Kühlelementen eine geschlossene Decke, welche die in Folge des Kaminzugs oder der Ventilatorleistung im Kühlturm aufsteigende Luft auf dem ersten und/oder zweiten Strömungsweg S1 und S2 durch die einzelnen Kühlelemente zwingt.

Das zu kühlende Kühlwasser wird den einzelnen Kühlelementen von einem zentralen Verteiler 26 über die Wasserzuführleitung 9 zugeführt und dort mittels der Sprühdüsen 11 über die Kühlrohre 1 gesprüht. Das gekühlte Wasser fliesst über die Rücklaufleitung 7 zurück ins Kühlwasserbecken 27.

Werden die Kühlelemente in der beschriebenen Art in einer Kühlbatterie oder einem Kühlturm verwendet, kann das Verhältnis von Nass- und Trockenkühlung auch dadurch gesteuert werden, dass von den vorhandenen Kühlelementen ein Teil als Trockenund der andere Teil als Nasselemente betrieben werden, wobei das Verhältnis der Anzahl der Trockenelemente zu jener der Nasselemente in Abhängigkeit der meteorologischen Parameter gewählt wird.

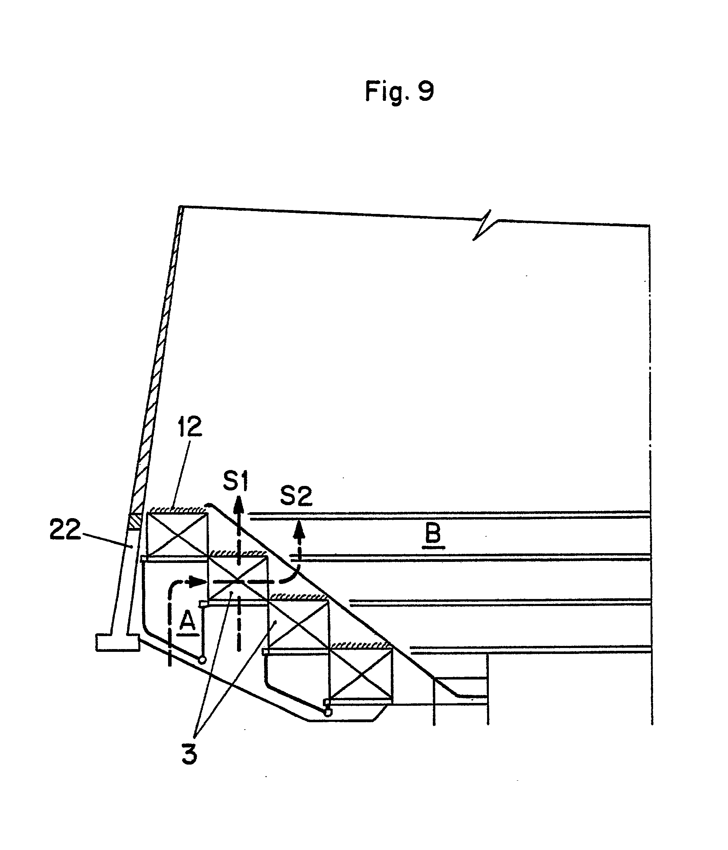

Die Fig. 9 zeigt die Zusammenfassung mehrerer Kühlelemente in einem Kaskadenkühlsystem mit Kühlturm. Gleiche Hinweisziffern bezeichnen gleiche Teile wie in den Fig. 7 und 8. Die in einer Kühlbatterie zusammengefassten Elemente stossen mit ihren Mänteln 3 treppenförmig aneinander, wobei jeweils die Unterkante des die Austrittenden der Rohre 1 enthaltenden Wandabschnitts des Mantels 3 an jenen Wandabschnitt des Nachbarelementes grenzt, der die Eintrittsenden von dessen Rohren 1 enthält. Dadurch können die beim Kühlsystem nach Fig. 7 notwendigen Umlenkorgane 25 entfallen.

Bei einem sehr kleinen Kühlsystem mit z.B. nur einem Kühlelement kann dieses mit der Eintrittseite seines ersten Strömungsweges in ein Kühlwassersammelbecken mit einer Niveauregulierung hineinragen. Da das Kühlwasserbecken in der Zone A liegt, kann der Strömungswiderstand im ersten Strömungsweg S2 durch das Heben bzw. Senken des Wasserniveaus verändert werden.

## Patentansprüche

1. Kühlelement, welches dazu bestimmt ist, mit einem ersten Teil (17, 18) seiner Aussenseite an eine Zone (A) höheren Luftdrucks und mit einem zweiten Teil (19, 20) seiner Aussenseite an eine Zone (B) niedrigereren Luftdrucks anzugrenzen, welches Kühlelement einen von der Zone (A) höheren Luftdrucks zur Zone (B) niedrigereren Luftdrucks führenden Luftdurchtritt und einen Mantel (3, 8) aufweist, in welchem quer orientierte Röhren (1) angeordnet sind, dadurch gekennzeichnet, dass der Luftdurchtritt durch einen ersten und einen zweiten Strömungsweg (S1, S2) gebildet wird, wobei der Mantel (3, 8) den ersten Strömungsweg (S1) seitlich begrenzt, dass im ersten Strömungsweg (S1) in Strömungsrichtung nach den Röhren (1) ein Kühlwassersprüheinrichtung (10, 11) zur Berieselung der Rohraussenseite vohanden ist, dass die Röhren (1) ein Eintritt- und ein Austrittende aufweisen und den zweiten Strömungsweg (S2) innen durch die Rohre zwischen den Zonen (A, B) bilden, wobei die Röhrenenden auf der Mantelaussenseite offen sind, derart, dass die Eintrittsenden der Röhren (1) im erst erwähnten Teil (17, 18) der Aussenseite und die Austrittenden im zweiterwähnten Teil (19, 20) der Aussenseite liegen, und dass im ersten und/oder zweiten Strömungsweg (S1, S2) Mittel (12, 15) zur Veränderung des Strömungswiderstandes angeordnet sind.

2. Kühlelement nach Anspruch 1, dadurch gekennzeichnet, dass die Röhreninnenseite mit Rippen zur Verbesserung des Wärmetausches versehen sind.

3. Kühlelement nach Anspruch 2, dadurch gekennzeichnet, dass der Mantel (3, 8) einen rechtwinkligen Querschnitt aufweist, und die Röhren (1) endseitig in zwei parallelen Seitenwänden gelagert bzw. befestigt sind, und dass die Mittel zur Veränderung des Strömungswiderstandes im zweiten Strömungsweg (S2) ein vor oder nach die offenen Röhrenenden bewegbares Stellglied (15) aufweisen.

4. Kühlelement nach Anspruch 1, dadurch gekennzeichnet, dass die Mittel zur Veränderung des Strömungswiderstandes im ersten Strömungsweg (S1) einen zur Strömungsrichtung quer orientierten Lamellenvorhang (12) mit schwenkbaren Lamellen aufweisen.

5. Kühlelement nach Anspruch 1 oder 2, dadurch gekennzeichnet, dass die erwähnten Mittel (12, 15) zur Veränderung des Strömungswiderstandes selbsttätig mittels Temperatur und/oder Feuchtigkeitsfühlern bzw. optischen Sensoren betätigbar sind.

6. Kühlelement nach Anspruch 1, dadurch gekennzeichnet, dass es mit der Eintrittseite des ersten Strömungsweges (S1) in ein Kühlwasserbecken hineinragt, und dass das Kühlwasserbecken mit einer Niveauregulierung versehen ist, um den Strömungswiderstand im ersten Strömungsweg zu verändern.

7. Verwendung eines Kühlelementes nach Anspruch 1, in einer Kühlbatterie mit mehreren in einer horizontalen Ebene angeordneten Kühlelementen, dadurch gekennzeichnet, dass die Kühlelemente mit Abstand voneinander angeordnet sind, derart, dass das Austrittende der Röhren (1) des einen Kühlelementes dem Eintrittsende der Röhren des benachbarten Kühlelementes zugewandt ist, und dass ein zwischen den Kühlelementen befindliches Umlenkorgan (25) die aus dem erwähnten Austrittende der Röhren (1) austretende Luft nach oben und gleichzeitig auf der Seite der Zone (A) niedrigeren Luftdrucks die Luft gegen die Eintrittsenden der Röhren umlenkt.

8. Verwendung eines Kühlelementes nach Anspruch 1 in einer Kaskadenkühlbatterie mit mehreren Kühlelementen, dadurch gekennzeichnet, dass die benachbarten Elemente treppenstufenartig aneinander stossen.

9. Verwendung einer Kühlbatterie nach Anspruch 7 oder 8, dadurch gekennzeichnet, dass im ersten Strömungsweg (S1) in Strömungsrichtung hinter der Kühlwassersprüheinrichtung (10, 11) ein Tropfenabscheider (12) vorhanden ist, und dass die Strömungswege (S1, S2) erst nach dem Tropfenabscheider (12) aufeinander treffen.

10. Verwendung einer Kühlbatterie nach Anspruch 7 oder 8 in einem Kühlturm (21), dadurch gekennzeichnet, dass eine Vielzahl von Kühlbatterien radialstrahlig und zentralsymmetrisch um die vertikale Kühlturmachse angeordnet sind.

**Revendications**

1. Elément de refroidissement destiné à être contigu par une première partie (17, 18) de sa face extérieure à une zone (A) de pression d'air supérieure et par une seconde partie (19, 20) de sa face extérieure à une zone (B) de pression d'air inférieure, lequel élément de refroidissement comporte un passage d'air allant de la zone (A) de pression d'air supérieure à la zone (B) de pression d'air inférieure et une chemise (3, 8) dans laquelle se trouvent des tubes (1) orientés transversalement, caractérisé en ce que le passage d'air est formé par un premier trajet d'écoulement et un second trajet d'écoulement (S1, S2), la chemise (3, 8) délimitant latéralement le premier trajet d'écoulement (S1), en ce qu'il y a dans le premier trajet d'écoulement (S1), dans le sens d'écoulement, après les tubes (1), un dispositif de projection d'eau de refroidissement (10, 11) pour asperger la face extérieure des tubes, en ce que les tubes (1) comportent une extrémité d'entrée et une extrémité de sortie et forment le second trajet d'écoulement (S2) intérieurement à travers les tubes entre les zones (A, B), les extrémités des tubes étant ouvertes du côté extérieur de la chemise, de telle sorte que les extrémités d'entrée des tubes (1) se trouvent dans la partie (17, 18) mentionnée en premier lieu de la face extérieure et les extrémités de sortie dans la partie (19, 20) mentionnée en second lieu de la face extérieure, et en ce que des moyens (12, 15) sont placés dans le premier trajet d'écoulement et/ou le second trajet d'écoulement (S1, S2) pour modifier la résistance à l'écoulement.

2. Elément de refroidissement selon la revendication 1, caractérisé en ce que la face intérieure des tubes comporte des nervures pour améliorer l'échange de chaleur.

3. Elément de refroidissement selon la revendication 2, caractérisé en ce que la chemise (3, 8) présente une section rectangulaire, et les tubes (1) sont placés ou fixés à l'extrémité dans deux parois latérales parallèles, et en ce que les moyens pour modifier la résistance à l'écoulement dans le second trajet d'écoulement (S2) comportent un organe de réglage (15) mobile avant ou après les extrémités de tube ouvertes.

4. Elément de refroidissement selon la revendication 1, caractérisé en ce que les moyens pour modifier la résistance à l'écoulement dans le premier trajet d'écoulement (S1) comportent un rideau de lamelles (12) orienté transversalement à la direction d'écoulement pourvu de lamelles pivotantes.

5. Elément de refroidissement selon la revendication 1 ou 2, caractérisé en ce que les moyens mentionnés (12, 15) pour la modification de la résistance à l'écoulement peuvent être actionnés automatiquement au moyen de sondes thermiques et/ou hygrométriques ou de capteurs optiques.

6. Elément de refroidissement selon la revendication 1, caractérisé en ce qu'il pénètre par le côté d'entrée du premier trajet d'écoulement (S1) dans une cuvette d'eau de refroidissement, et en ce que la cuvette d'eau de refroidissement comporte une régulation de niveau pour modifier la résistance à l'écoulement dans le premier trajet d'écoulement.

7. Elément de refroidissement selon la revendication 1, dans une batterie de refroidissement comportant plusieurs éléments de refroidissement disposés dans un plan horizontal, caractérisée en ce que les éléments de refroidissement sont placés à distance les uns des autres de telle façon que l'extrémité de sortie des tubes (1) de l'un des éléments de refroidissement située du côté de l'extrémité d'entrée des tubes de l'élément de refroidissement voisin, et en ce qu'un organe de déviation (25) se trouvant entre les éléments de refrodissement dévie l'air sortant de l'extrémité de sortie précitée des tubes (1) vers le haut et en même temps, du côté de la zone (A) de plus basse pression d'air, dévie l'air vers les extrémités d'entrée des tubes.

8. Elément de refroidissement selon la revendication 1, dans une batterie de refrodissement en cascade comportant plusieurs éléments de refroidissement, caractérisée en ce que les éléments voisins font jonction en formant des marches d'escalier.

9. Elément de refroidissement selon la revendication 7 ou 8, caractérisé en ce qu'il y a dans le premier trajet d'écoulement (S1) dans la direction d'écoulement, après le dispositif de projection d'eau froide (10, 11), un pare-gouttes (12) et en ce que les trajets d'écoulement (S1, S2) ne se rejoignent qu'après le pare-gouttes (12).

10. Utilisation d'une batterie de refroidissement selon la revendication 7 ou 8 dans une tour de réfrigération (21), caractérisée en ce qu'une pluralité de batteries· de refroidissement sont disposées suivant des rayons symétriquement autour de l'axe central vertical de la tour de réfrigération.

## Claims

1. Cooling element which is intended to be adjacent to a zone (A) of higher air pressure with a first part (17, 18) of its outside and to a zone (B) of lower air pressure with a second part (19, 20) of its outside and which has an air passage leading from the zone (A) of higher air pressure to the zone (B) of lower air pressure and a casing (3, 8), which transversely oriented tubes (1) are arranged, characterized in that the air passage is formed by a first and a second flow path (S1, S2), the casing (3, 8) limiting the first flow path (S1) laterally, in that in the first flow path (S1), after the tubes (1) in the direction of flow, there is a cooling-water spray device (10, 11) for sprinkling the outside of the tubes, in that the tubes (1) have an inflow end and an outflow end and form the second flow path (S2) on the inside through the tubes between the zones (A, B), the tube ends being open on the outside of the casing, in such a way that the inflow ends of the tubes (1) are located in the first-mentioned part (17, 18) of the outside and the outflow ends are located in the second-mentioned part (19, 20) of the outside, and in that means (12, 15) for varying the flow resistance are arranged in the first and/or second flow path (S1, S2).

2. Cooling element according to Claim 1, characterized in that the inside of the tubes is equipped with ribs for improving the heat exchange.

3. Cooling element according to Claim 2, characterized in that the casing (3, 8) has a rectangular cross-section, and the tubes (1) are mounted or fastened at their ends in two parallel side walls, and in that the means for varying the flow resistance in the second flow path (S2) have a regulating member (15) moveable to and fro in front of the open tube ends.

4. Cooling element according to Claim 1, characterized in that the means for varying the flow resistance in the first flow path (S1) have a slatted curtain (12) oriented transversely relative to the direction of flow and with pivotable slats.

5. Cooling element according to Claim 1 or 2, characterized in that the said means (12, 15) for varying the flow resistance are actuable automatically by means of temperature and/or humidity sensors or optical sensors.

6. Cooling element according to Claim 1, characterized in that it projects with the inflow side of the first flow path (S1) into a cooling-water tank, and in that the cooling-water tank is equipped with a level control, in order to vary the flow resistance in the first flow path.

7. Use of a cooling element according to Claim 1 in a cooling battery with several cooling elements arranged in a horizontal plane, characterized in that the cooling elements are arranged at a distance from one another, in such a way that the outflow end of the tubes (1) of one cooling element faces the inflow end of the tubes of the adjacent cooling element, and in that a deflecting member (25) located between the cooling elements deflects upwards the air coming out of the said outflow end of the tubes (1) and at the same time, on the zone (A) side of lower air pressure, deflects the air towards the inflow ends of the tubes.

8. Use of a cooling element according to Claim 1 in a cascade cooling battery with several cooling elements, characterized in that the adjacent elements butt against one another in the manner of stair steps.

9. Use of a cooling battery according to Claim 7 or 8, characterized in that a drop separator (12) is provided in the first flow path (S1) behind the cooling-water spray device (10, 11) in the direction of flow, and in that the flow paths (S1, S2) meet one another only after the drop separator (12).

10. Use of cooling battery according to Claim 7 or 8 in a cooling tower (21), characterized in that a plurality of cooling batteries is arranged around the vertical axis of the cooling tower in a radially radiating and centrally symmetrical manner.

Fig. 2

Fig. 1

Fig. 3

Fig. 4

Fig. 5

Fig. 6

Fig.7

**21**

25    12    25    12    25

Fig. 8

# Fig. 9